# EUROPÄISCHE PATENTSCHRIFT

(11) **EP 0 438 676 B1**
(45) Veröffentlichungstag und Bekanntmachung des Hinweises auf die Patenterteilung: **23.03.1994**
(21) Anmeldenummer: 90123269.4
(22) Anmeldetag: 05.12.1990
(51) Int. Cl.: B01D 45/08, F24C 15/20

(54) **Vorrichtung zum Abscheiden von Fluiden**
Apparatus for separating fluids
Dispositif pour séparer des fluides

(30) Priorität: 20.01.1990 DE 4001548
(43) Veröffentlichungstag der Anmeldung: 31.07.1991
(73) Patentinhaber: H.KRANTZ - TKT Gesellschaft mit beschränkter Haftung, D-51465 Bergisch Gladbach (DE)
(72) Erfinder: Klein, Thomas Joachim, W-5060 Bergisch Gladbach 2 (DE); Brunk, Marten, Dr., W-5060 Bergisch Gladbach 2 (DE)
(74) Vertreter: Müller, Jürgen, Dipl.-Ing.

(56) Entgegenhaltungen:
- DE-A- 3 724 511
- FR-A- 2 164 984
- US-A- 2 422 527

## Beschreibung

Die Erfindung betrifft eine Vorrichtung zum Abscheiden von festen, flüssigen, staubförmigen oder kondensierbaren Fluiden aus einem Gas mit den Merkmalen des Oberbegriffes des Patentanspruches 1. Eine solche Vorrichtung ist aus der DE-A-35 21 927 bekannt.

Die Abscheidevorrichtung eignet sich insbesondere zum Abscheiden von staubförmigen Partikeln und aerosolförmigen Fluiden wie Kühlfluiden, Kühlschmierstoffen, Ölnebeln, Fettnebeln und Wassernebeln zum Beispiel aus relativ schnell strömender Luft in Rohrleitungen oder langsam bewegter aufsteigender Luft in Räumen wie Großküchen. Bei bekannten Abscheidevorrichtungen (DE-C 26 41 765, DE-B 27 18 611) weisen die Abscheideprofile einen kreisringförmigen oder einen U-förmigen Querschnitt auf und sind innerhalb eines Rahmens in zwei gegenüberliegenden Reihen versetzt zueinander angeordnet. Dabei überlappen die freien Längskanten der Abscheideprofile der einen Reihe die freien Längskanten der Abscheideprofile der anderen Reihe. Das in den Abscheideprofilen der nach unten offenen Reihe eintretende Gas gleitet an den Abscheideprofilen entlang, tritt in eine sich erweiternde Kammer zwischen den sich überlappenden Längskanten ein und gelangt von dort in die Abscheideprofile der nach oben offenen Reihe. Die bekannten Abscheideprofile arbeiten somit nach dem Umlenkungs- oder Zentrifugalprinzip. Die abgeschiedenen Fluide sammeln sich in den nach unten geschlossenen Abscheideprofilen und werden von dort abgezogen. Wenn die abgeschiedenen und kondensierten fluide auf den Abscheideprofilen verkrusten, müssen die Abscheideprofile zur Entfernung des Belages einzeln demontiert werden, wenn man nicht die Abscheideprofile als Hohlprofile ausbildet, die wahlweise von einem Kühl- und einem Heizmedium durchströmt werden.

Der bekannte, auf dem gleichen Prinzip beruhende Abscheider (DE-A 35 21 927) enthält lösbar angeordnete Abscheideprofile. Diese Abscheideprofile sind mit einem Vorsprung versehen, der von dem Scheitelbereich der Innenfläche ausgeht, sich in Richtung auf die öffnung des Profiles erstreckt und in Längsrichtung verläuft. Auf diese Weise werden in den Abscheideprofilen zusätzliche Kammern geschaffen, wodurch die Strömungsgeschwindigkeit beeinflußt und dadurch der Abscheidegrad erhöht werden soll.

Der Erfindung liegt die Aufgabe zugrunde, das gattungsgemäße Abscheideprofil so zu gestalten, daß aufgrund eines geänderten Strömungsverhaltens der Abscheidegrad bei gleichzeitig vereinfachter Fertigung und Demontagemöglichkeit erhöht wird.

Bei dem erfindungsgemäßen Abscheideprofil wird durch den Einbau des stabförmigen Abscheidehilfselementes der in der Strömungstechnik bekannte Coandaeffekt ausgenutzt. Dieser bewirkt, daß die Strömung an der Wandung des Abscheideprofils und des Abscheidehilfselementes anhaftet, wodurch die zur Abscheidung notwendige Oberfläche vergrößert und der Abscheidegrad verbessert wird. Die sich durch den Coandaeffekt hinter den Abscheidehilfselementen und an den Längskanten der Abscheideprofile ausbildenden Ablöseerscheinungen und Wirbel führen, durch die Symmetrie des Abscheideprofils verstärkt, aufgrund der Geschwindigkeitsabsenkung zu einem weiteren Abscheiden der in dem Gas enthaltenen Fluide. Die Verwendung eines stabförmigen Abscheidehilfselementes läßt eine einfache Gestaltung der Abscheideprofile zu. So lassen sich mehrere in einem Abstand voneinander angeordnete Abscheideprofile aus einem Stück fertigen, indem sie aus einer Tafel herausgestanzt und die Schenkel ausgeknickt werden. Neben einer einfachen Fertigung sind dadurch die Abscheideprofile gegeneinander fixiert und können anders als bei den bekannten Vorrichtungen mit losen Profilen bei einer Demontage zum Zwecke der Abreinigung nicht verrutschen. Außerdem läßt sich der Abstand einander gegenüberliegender Abscheideprofile in einfacher Weise variieren, wodurch aufgrund des sich ändernden Druckverlustes der Abscheidegrad für unterschiedliche Fluide optimiert werden kann.

Mehrere Ausführungsbeispiele der Erfindung sind in der Zeichnung dargestellt und werden im folgenden näher erläutert. Es zeigen:

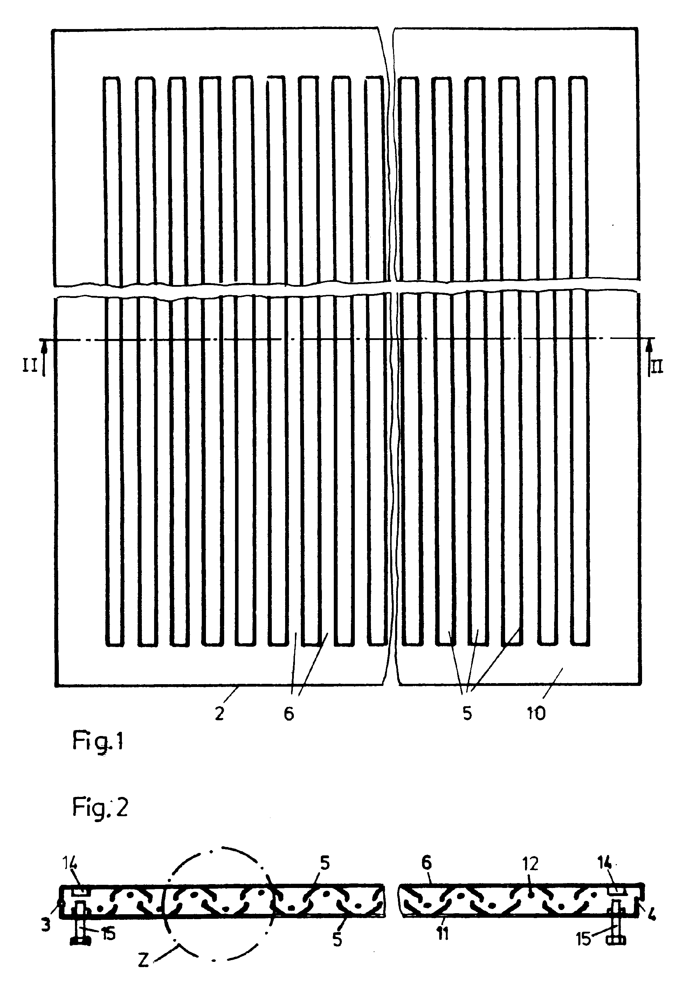

- Fig. 1: ein Flächenelement mit Abscheideprofilen,
- Fig. 2: den Schnitt II-II nach Fig. 1,
- Fig. 3: die Einzelheit Z nach Fig. 2 und
- Fig. 4: bis 6 ein Abscheideprofil mit unterschiedlichen Abscheidehilfselementen.

Die dargestellte Vorrichtung zum Abscheiden von Fluiden aus einem Gas, insbesondere aus Luft, besteht aus zwei in einem Abstand voneinander angeordneten Flächenelementen 1, 2. Die Flächenelemente 1, 2 sind an zwei gegenüberliegenden Längsseiten abgekantet und dort mit einem Scharnier 3 und einem Schloß 4 versehen. Das Scharnier 3 und das Schloß 4 halten im eingebauten Zustand die Flächenelemente 1, 2 zusammen. Der Abstand der Flächenelemente 1, 2 voneinander läßt sich durch unterschiedliche Längen der abgekanteten Längsseiten variieren.

Anstatt mit Scharnier 3 und Schloß 4 kann auch ein Flächenelement 2 mit Gewindemuffen 14 und das andere Flächenelement 1 mit Schrauben 15 versehen sein, die in die Gewindemuffen 14 eingreifen. Über diese Gewindemuffen 14 und Schrauben 15 läßt sich die Verbindung und stufenlos der gegenseitige Abstand der Flächenelemente 1, 2 herstellen.

Jedes Flächenelement 1, 2 weist mehrere rinnenförmige Abscheideprofile 5 auf, die parallel zueinander verlaufen. Die Abscheideprofile 5 sind in einem Abstand voneinander angeordnet und schließen zwischen sich einen geschlossenwandigen Abschnitt 6 ein. Jedes Abscheideprofil 5 ist symmetrisch und weist einen ebenen Scheitelbereich 7 auf. An den Scheitelbereich 7 schließen sich zwei unter einem Winkel liegende vorzugsweise ebene Seitenteile 8 an, die in jeweils eine senkrecht zum Scheitelbereich stehende Längskante 9 übergeben. Die Abscheideprofile 5 in den Flächenelementen 1, 2 sind versetzt zueinander angeordnet, wobei sich die Längskanten 9 der Abscheideprofile 5 des unteren Flächenelementes 1 und die Längskanten 9 der Abscheideprofile 5 des oberen Flächenelementes 2 überlappen. Ferner liegt dem Scheitelbereich 7 eines Abscheideprofils 5 in einem der Flächenelemente 1, 2 ein geschlossenwandiger Abschnitt 6 in dem anderen Flächenelement 1, 2 gegenüber.

Die Abscheideprofile 5 lassen sich in vorteilhafterweise dadurch herstellen, daß aus einer Blechtafel unter Belassung eines umlaufenden Randes 10 parallele Streifen ausgestanzt werden. Die herausgestanzten Streifen werden zur Bildung der Seitenteile 8 und der Längskanten 9 abgeknickt. Dabei entstehen zwischen dem Scheitelbereich 7 der Abscheideprofile 5 und dem geschlossenwandigen Abschnitt 6 schlitzförmige öffnungen 11. Als Material für die Flächenelemente 1, 2 kommt Kunststoff oder Metall, insbesondere Aluminium in Frage.

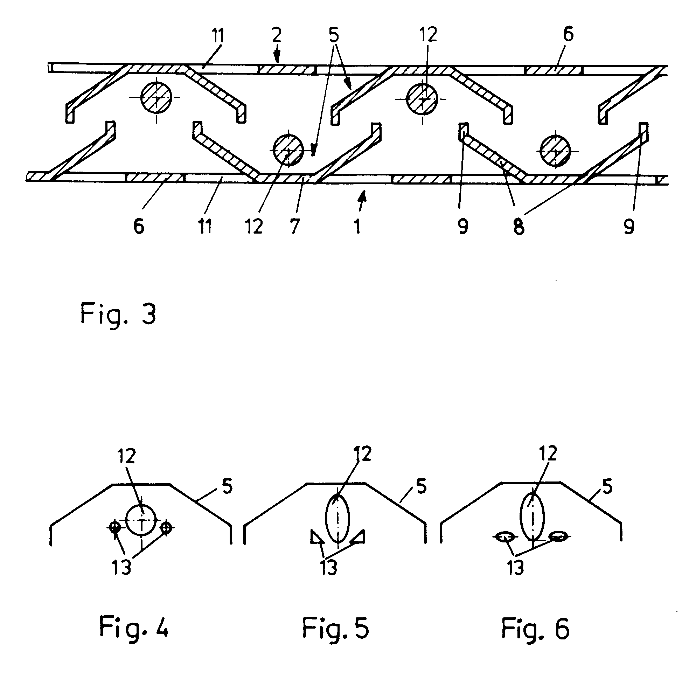

In einem Abstand von dem Scheitelbereich 7 des Abscheideprofiles 5 ist innerhalb des von dem Abscheideprofil 5 umschlossenen Innenraumes ein stabförmiges Abscheidehilfselement 12 in Längsrichtung des Abscheideprofiles 5 angeordnet. Im einfachsten Fall besteht dieses Abscheidehilfselement 12 aus einem Rundstab. Wie in den Figuren 5 und 6 gezeigt ist, können die Abscheidehilfselemente auch einen länglichen rechteckigen oder vorzugsweise ovalen Querschnitt aufweisen. Dabei verläuft die längere Querschnittsabmessung eines solchen Abscheidehilfselementes 12 vorzugsweise senkrecht oder auch parallel zu dem ebenen Scheitelbereich 7 des Abscheideprofiles 5. Gemäß den Fig. 4 bis 6 können parallel zu dem stabförmigen Abscheidehilfselement 12 weitere Stäbe 13 vorgesehen sein, die eine runde, eckige oder ovale Querschnittsform aufweisen können.

Die in einem Raum aufsteigende und ein Fluid, zum Beispiel in Form eines Fettnebels, enthaltende Luft tritt durch die schlitzförmigen öffnungen 11 des unteren Flächenelementes 1 in die Abscheidevorrichtung ein und strömt dem Scheitelbereich 7 der Abscheideprofile 5 des oberen Flächenelementes 2 zu. Das stabförmige Abscheidehilfselement 12 und gegebenenfalls die weiteren Stäbe 13 üben auf die Luftströmung einen Coandaeffekt aus, durch den die Luftströmung gezwungen wird, sich eng an die Seitenteile 8 des Abscheideprofiles 5, an das stabförmige Abscheidehilfselement 12 und an die Stäbe 13 anzulegen. Das in der Luft enthaltene Fluid schlägt sich an der Innenwandung des Abscheideprofiles 5 nieder, wobei durch die besondere Strömungsführung aufgrund des Coandaeffektes der Abscheidegrad bei vorgegebener Abscheidefläche erhöht wird. Die sich durch den Coandaeffekt ausbildenden Ablöseerscheinungen und Wirbel an den Längskanten 9 der Abscheideprofile 5 führen, verstärkt durch die symmetrische Ausbildung der Abscheideprofile 5, zu einem weiteren Abscheiden der in der Luft enthaltenen Fluide. Die Luft gelangt anschließend in die Abscheideprofile 5 des unteren Flächenelementes 1, wobei sich der beschriebene Vorgang wiederholt. Die auf diese Weise von dem Fluid befreite Luft tritt durch die schlitzförmigen öffnungen 11 des oberen Flächenelementes 2 aus. Durch die Wahl der Ausbildung der stabförmigen Abscheidehilfselemente 12, der Größe des Neigungswinkels der Seitenteile 8 der Abscheideprofile 5 und durch den gegenseitigen Abstand der Flächenelemente 1, 2 kann der Abscheidegrad der Fluide variiert werden.

Damit sich ein Coandaeffekt einstellt, können die Abscheidehilfselemente 12 auch eine andere Querschnittsform als die dargestellte aufweisen, oder aus Gründen einer Gewichtsersparnis aus Hohlprofilen, z. B. aus Rohren bestehen. Wesentlich ist nur, daß das Abscheidehilfselement 12 so gestaltet und angeordnet ist, daß ein Ausbreiten des Luftstromes seitlich behindert wird und sich aufgrund dessen der Luftstrom an das Abscheidehilfselement 12 anlegt.

Durch den Zusammenbau der Flächenelemente 1, 2 mit Hilfe des Scharniers 3 ist eine einfache Möglichkeit zum Reinigen gegeben. Die einzelnen Abscheideprofile 5 können im eingebauten Zustand gereinigt werden, indem man das untere Flächenelement 1 ausklappt und die Abscheideprofile 5 beispielsweise mit einem Dampfstrahlgerät oder einem ähnlichen Reinigungsgerät von dem anhaftenden Schmutz befreit. Dabei ist es vorteilhaft, daß keine einzelnen Teile ausgebaut werden müssen, so daß diese auch nicht durch den Reinigungsvorgang gelöst oder entfernt werden können. Ebenfalls gelangt man durch das Aufklappen in den inneren Bereich, der sonst bei einer festen Montage von den Reinigungsmitteln nicht erreicht werden kann.

Das beschriebene Abscheideprofil 5 kann auch als Einzelprofil in Rohrleitungen oder als Kombination mehrerer Profile hintereinander (Fig. 3) oder nebeneinander oder in Kombination mit einem Drahtgewebe als Tropfenagglomerator zur rein physikalisch-mechanischen Abtrennung verwendet werden. Es ist auch eine Verbindung zwischen den beschriebenen Abscheideprofilen und einem Elektrofilter oder einem ähnlichen Filter möglich.

## Patentansprüche

1. Vorrichtung zum Abscheiden von festen, flüssigen, staubförmigen oder kondensierbaren Fluiden aus einem Gas bestehend aus quer angeströmten, symmetrischen, rinnenförmigen Abscheideprofilen (5), die in zwei Reihen einander zugewandt und versetzt zueinander angeordnet sind, dadurch gekennzeichnet, daß in einem Abstand von dem Scheitel (7) jedes Abscheideprofiles (5) innerhalb des von dem betreffenden Abscheideprofil (5) umschlossenen Innenraumes parallel zu dessen Längsachse ein stabförmiges Abscheidehilfselement (12) angeordnet ist, an das sich das die Abscheideprofile (5) durchströmende Gas aufgrund des Coandaeffektes anlegt.

2. Vorrichtung nach Anspruch 1, dadurch gekennzeichnet, daß die Abscheideprofile (5) einer Reihe zu einem Flächenelement (1, 2) miteinander verbunden sind und daß die Flächenelemente (1, 2) in einem Abstand voneinander angeordnet sind.

3. Vorrichtung nach den Ansprüchen 1 und 2, dadurch gekennzeichnet, daß die Abscheideprofile (5) aus einer ebenen Tafel herausgestanzt und aus der Tafelebene ausgeknickt sind.

4. Vorrichtung nach den Ansprüchen 1 bis 3, dadurch gekennzeichnet, daß zwischen den Abscheideprofilen (5) eines Flächenelementes (1, 2) geschlossenwandige Abschnitte (6) angeordnet sind.

5. Vorrichtung nach den Ansprüchen 1 bis 4, dadurch gekennzeichnet, daß die Flächenelemente (1, 2) an einer Längskante über ein Scharnier (3) und an der dazu parallelen Längskante über ein Schloß (4) miteinander verbunden sind.

6. Vorrichtung nach einem der Ansprüche 1 bis 5, dadurch gekennzeichnet, daß das Abscheidehilfselement (12) einen runden Querschnitt aufweist.

7. Vorrichtung nach einem der Ansprüche 1 bis 5, dadurch gekennzeichnet, daß das Abscheidehilfselement (12) einen länglichen Querschnitt aufweist und daß die längere Querschnittsabmessung auf den Scheitel (7) des Abscheideprofiles (5) weist.

8. Vorrichtung nach Anspruch 6 oder 7, dadurch gekennzeichnet, daß parallel zu dem stabförmigen Abscheidehilfselement (12) weitere stabförmige Abscheidehilfselemente (13) geringeren Querschnittes angeordnet sind.

## Claims

1. Device for the separation of solid, liquid, powdery or condensable fluids from a gas, consisting of symmetrical, trough-shaped separating profiles (5) which are flowed towards transversely and which are arranged facing one another two rows and offset relative to one another, characterised thereby that at a spacing from the crest (7) of each separating profile (5) and within the interior space enclosed by the respective separating profile (5) is a rodlike auxiliary separating element (12) which extends parallel to the longitudinal axis of the separating profile (5) and against which the gas flowing through the separating profiles (5) presses due to Coanda effect.

2. Device according to claim 1, characterised thereby that the separating profiles (5) of a row are connected together into an areal element (1, 2) and that the areal elements (1, 2) are arranged at a spacing from one another.

3. Device according to claims 1 and 2, characterised thereby that the separating profiles (5) are punched out of a flat panel and bent out of the plane of the panel.

4. Device according to claims 1 to 3, characterised thereby that closed-wall sections (6) are arranged between the separating profiles (5) of an areal element (1, 2).

5. Device according to claims 1 to 4, characterised thereby that the areal elements (1, 2) are connected together at a longitudinal edge by way of a hinge (3) and at the longitudinal edge parallel thereto by way of a fastening (4).

6. Device according to one of claims 1 to 5, characterised thereby that the auxiliary separating element (12) has a round cross-section.

7. Device according to one of claims 1 to 5, characterised thereby that the auxiliary separating element (12) has an elongate cross-section and that the longer cross-sectional dimension points towards the crest (7) of the separating profile (5).

8. Device according to claim 6 or 7, characterised thereby that further rodlike auxiliary separating elements (13) of smaller cross-section are arranged parallel to the rodlike auxiliary separating element (12).

## Revendications

1. Dispositif de séparation de fluides à l'état solide, liquide, de poussières, ou de matières condensables à partir d'un gaz, composé de profilés de séparation symétriques en forme de goulottes (5), sur lesquels le flux arrive transversalement, disposés en deux rangées tournées l'une vers l'autre et décalées l'une par rapport à l'autre, caractérisé en ce qu'un élément auxiliaire de séparation (12) en forme de barre est disposé à distance du sommet (7) de chaque profilé de séparation (5), à l'intérieur de l'espace enclos par ce profilé et parallèlement à son axe longitudinal, élément sur lequel le gaz dont l'écoulement traverse les profilés de séparation (5) arrive du fait de l'effet Coanda.

2. Dispositif selon la revendication 1, caractérisé en ce que les profilés de séparation (5) d'une rangée sont reliés ensemble en constituant un élément de surface (1, 2), et en ce que les éléments de surface (1, 2) sont disposés à distance les uns des autres.

3. Dispositif selon les revendications 1 et 2, caractérisé en ce que les profilés de séparation (5) sont formés par étampage à partir d'un panneau et infléchis à partir du plan du panneau.

4. Dispositif selon les revendications 1 et 3, caractérisé en ce que entre les profilés de séparation (5) d'un élément de surface (1, 2) sont disposées des sections (6) à parois fermées.

5. Dispositif selon les revendications 1 à 4, caractérisé en ce que les éléments de surface (1, 2) sont reliés ensemble sur un bord longitudinal, par l'intermédiaire d'une charnière, et sur le bord longitudinal parallèle, par l'intermédiaire d'un fermoir.

6. Dispositif selon l'une des revendications 1 à 5, caractérisé en ce que l'élément de séparation (12) présente une section transversale ronde.

7. Dispositif selon l'une des revendications 1 à 5, caractérisé en ce que l'élément de séparation auxiliaire présente une section transversale allongée et en ce que la dimension longitudinale de la section transversale est tournée vers le sommet (7) du profilé de séparation (5).

8. Dispositif selon la revendication 6 ou 7, caractérisé en ce que d'autres éléments auxiliaires de séparation (13), en forme de barres, à sections transversales plus petites, sont disposés parallèlement aux barres auxiliaires de séparation (12).
